Europäisches Patentamt

European Patent Office

Office européen des brevets

(11) Veröffentlichungsnummer: **0 290 719 B1**

(19)

(12) # EUROPÄISCHE PATENTSCHRIFT

(45) Veröffentlichungstag der Patentschrift: **25.11.92**

(21) Anmeldenummer: **88101295.9**

(22) Anmeldetag: **29.01.88**

Die Akte enthält technische Angaben, die nach dem Eingang der Anmeldung eingereicht wurden und die nicht in dieser Patentschrift enthalten sind.

(51) Int. Cl.⁵: **C22C 38/28**, B01J 23/86, H05B 3/12

(54) **Halbfertigerzeugnis aus ferritischem Stahl und seine Verwendung.**

(30) Priorität: **27.02.87 DE 3706415**

(43) Veröffentlichungstag der Anmeldung:
**17.11.88 Patentblatt 88/46**

(45) Bekanntmachung des Hinweises auf die Patenterteilung:
**25.11.92 Patentblatt 92/48**

(84) Benannte Vertragsstaaten:
**AT BE CH DE ES FR GB GR IT LI LU NL SE**

(56) Entgegenhaltungen:
**EP-A- 0 225 263**
**DE-A- 2 031 495**
**GB-A- 2 160 892**
**US-A- 4 010 049**

**Peckner-Bernstein, HANDBOOK OF STAINL-ESS STEELS, McGraw-Hill Book Company; p. 14-2&NUM;**

(73) Patentinhaber: **Thyssen Edelstahlwerke AG**
**August-Thyssen-Strasse 1**
**W-4000 Düsseldorf(DE)**

(72) Erfinder: **Böhnke, Kurt, Dipl.-Ing.**
**Columbusstrasse 16**
**W-5802 Wetter 4(DE)**
Erfinder: **Brandis, Helmut, Dr.-Ing.**
**Forstwaldstrasse 694**
**W-4150 Krefeld(DE)**
Erfinder: **Domalski, Hans-Heinrich, Dr.-Ing.**
**Jageplatz 13a**
**W-5802 Wetter 4(DE)**
Erfinder: **Fleischer, Hans-Joachim, Dr.-Ing.**
**Am Lohberg 14**
**W-5620 Velbert 11(DE)**
Erfinder: **Frinken, Heinrich, Dr.**
**Höltkenstrasse 19**
**W-5802 Wetter 4(DE)**

**Beschreibung**

Die Erfindung betrifft ein Halbfertigerzeugnis, insbesondere Profil- und Flachprodukte aus einem ferritischen Stahl und seine Vewendung.

Für viele Anwendungsfälle ist neben der Beständigkeit gegen Oxidation bei zyklischer und bei kontinuierlicher thermischer Belastung die Formtreue, auch bei Temperaturen weit über 900°C, erforderlich. Die Heizelemente mit Widerstandserwärmung durch elektrischen Strom sind charakteristische Beispiele dafür.

Eisen-Chrom-Aluminium-Legierungen sind wegen ihres hohen spezifischen elektrischen Widerstands - Werte bis zu 1,6 Ohm $\cdot$ mm$^2$ $\cdot$ m$^{-1}$ sind bekannt - und ihrer Zunderbeständigkeit den austenitischen Widerstandslegierungen ebenbürtig bzw. überlegen. Demgegenüber haben die austenitischen Nickel-Chrom-Legierungen zum Zwecke der Widerstandserwärmung durch elektrischen Strom bei Temperaturen größer 1000°C deutliche Vorteile im Kriechdehnungsverhalten. Die Verbesserung (Verringerung) der Dehnbeträge bei thermischer Belastung ist für die Eisen-Chrom-Aluminium-Stähle demnach von technischem und wirtschaftlichem Vorteil. Diese preisgünstigeren Stähle sind in einem erweiterten Temperaturbereich einzusetzen.

Zur Verbesserung der Kriechdehnungseigenschaften von Eisen-Chrom-Aluminium-Stählen sind Yttrium-Zusätze zwischen 0,01 und 3 % bekannt. (Alle %-Angaben sind Masse-%).

In der DE-OS 29 16 959 ist die Verbesserung des Heißgas-Korrosionsverhaltens durch Yttrium- und Siliziumkonzentrationen herausgestellt worden. Träger dieser Eigenschaften soll in erster Linie das über 1000°C entstehende -Al$_2$O$_3$ an der Oberfläche von Heizelementen mit Widerstandserwärmung und Trägerfolien in Kraftfahrzeugabgas-Reinigungsanlagen (Katalysatoren) sein. Neben dem wirtschaftlichen Aspekt der hohen Gestehungskosten der Yttrium-Vorlegierung hat dieses. Element in Eisen-Chrom-Aluminium-Legierungen den Nachteil, die maximale Anwendungstemperatur auf ca. 1250°C abzusenken. Im Zweistoffsystem Yttrium-Eisen vorhandene Eutektika, z.B. zwischen YFe4 und YFe5 sind die Ursache. Die Einzelheiten wurden von R.F. Domagala, J.J. Rausch und D.W. Levinson in Trans. ASM 53 (1961), S. 137 - 155 und R.P. Elliott in "Constitution of Binary Alloys (1. Ergänzung)" Mc Graw-Hill Book Company, New York, (1965) Seite 442 Bild 231 Fe-Y beschrieben.

Von H. Pfeiffer und H. Thomas in "Zunderfeste Legierungen" Springer Verlag 1963, 2. Auflage, Berlin/Göttingen/Heidelberg, Seite 248 und 249 sind die Grundlagen für die Zunderbeständigkeit beschrieben. Im wesentlichen ist das Aluminiumoxid (Al$_2$O$_3$) Träger des Schutzes gegen die Oxidation. Dabei sind die Bedingungen oberhalb 1000°C für die Lebensdauer am interessantesten. Bei der Bewertung der Betriebsdauer, d.h. der Dauer der zyklisch oder kontinuierlich aufgebrachten thermischen Belastung, ist das Haftvermögen zwischen metallischem Querschnitt und der Al$_2$O$_3$-Schicht darauf von vorrangiger Bedeutung. Die Aluminiumoxidschicht bildet dann einen optimalen Schutz, weg deren Dichtigkeit hoch ist und ein Abplatzen des Oxides nicht stattfindet. Aufgrund der unterschiedlichen Wärmeausdehnungskoeffizienten von Metallmatrix und des Oxids ist jedoch stets mit einem mehr oder minder starken Abplatzen (spalling) der Oxidschicht zu rechnen. J. Peters und H.J. Grabke ("Werkstoffe und Korrosion" 35 (1984) S. 385 bis 394) haben den Einfluß von sauerstoffaffinen Elementen auf Eisenbasis-Legierungen untersucht, mit dem Ergebnis, daß titanhaltige mit Chrom- und Aluminium legierte Stähle eine gute Deckschicht bilden. Erklärt wird dieses günstige Verhalten durch Bildung einer feinkörnigen Aluminiumoxidschicht auf einer Titanoxicarbidlage zwischen Al$_2$O$_3$ und Ferrit.

Weiternin wurde über eine hitzebeständige ferritische nichtrostende Stahllegierung berichtet (US-PS 44 14 023), welche mit einer Basislegierung von Eisen mit 8 bis 25 % Chrom, 3 bis 8 % Aluminium und einem Zusatz von Seltenen Erdmetallen Cer, Lanthan, Neodym, Praseodym und den weiteren Elementen dieser Gruppe in dem Konzentrationsbereich zwischen 0,002 % und max. 0,06 % eine haftende Verbindung zwischen Oxid und ferritischer Matrix bildet. Es ist hierbei besonders hervorgehoben worden, daß

a) Titanzusätze einen negativen Einfluß haben,

b) Zirkonium keinen oder lediglich einen geringfügig positiven Einfluß auf das Haftvermögen ausübt bei Konzentrationen bis 0,008 %,

c) nur ein Element einzusetzen ist, da bei Zusätzen von komplex zusammengesetzten Legierungen das Element mit den am meisten negativen Einfluß auf die Schutzwirkung gegen Oxidation letztlich bestimmt.

Aus der US-PS 39 92 161 ist ein Stahl mit 10 bis 40 % Cr, 1 - 10 % Al, bis 10 % Ni, bis 20 % Co, bis 5 % Ti, bis jeweils 2 % Seltenerdenmetall, Y, Zr, Nb, Hf, Ta, Si, V, bis jeweils 6 % W und Mo sowie bis 0,4 % C, bis 0,4 % Mn und 0,1 bis 10 Vol.-% eines Dispersoids aus der Gruppe Metalloxid, Metallcarbid, Metallnitrid, Metallborid, Rest Eisen bekannt, der insbesondere für die Herstellung von Widerstandsheizelementen, Schaufeln und Brennkammern von Gasturbinen vorgesehen ist. Wesentlicher Bestandteil zur Erzielung der angestrebten Festigkeitseigenschaften ist bei diesem bekannten Stahl das Dispersoid, welches nach den Ausführungsbeispielen in einer Gesamtmenge von etwa 1 % des Stahlgewichts anwesend ist. Dispersoide wirken zwar festigkeitserhöhend, allerdings auf Kosten der Duktilität, verschlechtern aber entscheidend die Verarbeitungseigenschaften und bewirken vermehrte Zurichtarbeit, weil infolge des schlechteren Reinheitsgrades des Stahls in erhöhtem Maß Oberflächenfehler bei der Verarbeitung auftreten, die durch Schleifen entfernt werden müssen, was hohe Kosten verursacht. Nachteilig bei dem aus der US-PS 39 92 161 ist insbesondere die teure pulvermetallurgische Herstellung, die wegen der notwendigen feinsten Verteilung der im Bereich von 50 bis 5000 Å liegenden Dispersoide allein in ßetracht kommt. Auf schmelzmetallurgischem Wege ist eine ausreichend feine Verteilung der Dispersoide nicht erreichbar. Wegen des Gehalts an Dispersoiden ist der bekannte Stahl auch schlecht schweißar und hat einen geringen Kriechwiderstand bei Temperaturbelastung.

Aus der DE-A-2 031 495 ist eine Stahllegierung bekannt, die aus 19,6 % Cr, 3,6 % Al, 0,035 % C, 0,010 % N, 0,27 % Ti, 0,23 % Zr, 0,06 % Si, 0,10 % Mn, Rest Fe plus Verunreinigungen besteht. Diese Stahllegierung war bekannt als Werkstoff für Gegenstände, die heißen korrosiven Gasen, die Halogene enthalten, ausgesetzt sind und korrosions- und Oxidationsbeständig sein müssen. Dieser Schrift war jedoch nicht zu entnehmen, wie man die Heißgaskorrosionsbeständigkeit von Stahllegierungen weiter verbessern kann.

Der Erfindung liegt die Aufgabe zugrunde, die ferritischen hitzebeständigen Stähle auf Eisen-Chrom-Aluminium-Basis so in ihrem Oxidationswiderstand zu verbessern, daß die anfänglichen Eigenschaften von Erzeugnissen für Heizelemente bei Erwärmung mit Hilfe elektrischen Widerstandes bei Stromdurchfluß und solche für metallische Trägerfolien in Katalysatoren, z.B. zur Abgasreinigung auch nach langer Betriebsdauer unverändert bleiben. Gleichzeitig sollen die Verarbeitungseigenschaften verbessert werden, damit vermehrte Zurichtarbeit entbehrlich wird.

Diese Aufgabe wird durch ein Halbfertigerzeugnis aus einem Stahl in der Zusammensetzung nach einem der Ansprüche 1 bis 4 gelöst. Bevorzugte Verwendungen sind in den Ansprüchen 5 bis 7 angegeben.

Kern der Erfindung ist ein Stahl mit Chrom und Aluminium in den üblichen Mengen, aber mit Sonderzusätzen an Silizium, Mangan, Molybdän, Zirkonium, Titan, Stickstoff, Calcium und Magnesium. Ein bevorzugter Zusatz von Seltenen Erdmetallen in Mengen von 0,003 bis 0,80 % verbessert das Verhalten des elektrischen Widerstandes unter dem Einfluß lang anhaltender hoher Temperaturen und erhöht die Warmfestigkeit bis zu den oberen Anwendungstemperaturen. Durch den bevorzugten Zusatz von Niob in einer Menge bis 0,5 % wird die Festigkeit noch gesteigert.

Neben den bekannten Vorzügen der wirtschaftlichen Legierungselemente, wie Chrom und Aluminium, ist die Wirkung der Sonderzusätze in Kombination miteinander wesentlich für die Beständigkeit der während der Oxidation entstehenden Schutzschichten und deren Funktion bei den vorgesenenen Verwendungen. Neben der Verbesserung der Werkstoffeigenschaften, z.B. der Verschiebung des Beginns der Grobkornbildung zu höheren Temperaturen, ist für alle hier genannten Elemente eine hohe Sauerstoffaffinität charakteristisch. Dadurch wird die Verzunderung von Chrom und Aluminium verzögert. Zusätzlich wird das Haftvermögen der gebildeten Oxidschichten verbessert. Eine Chromverarmung an den Korngrenzen wird durch die Anwesenheit von Zirkonium und Titan vermieden bzw verzöger. Die durch Aluminium und Chrom bewirkte Zunderbeständigkeit bleibt an der gesamten Metalloberfläche erhalten. Für die angegebenen Verwendungszwecke ist eine schnelle Aufheizung bzw. Abkühlung mit den Schwierigkeiten, die durch die stark voneinander abweichenden Ausdehnungskoeffizienten von Metallegierung und Zunderauflage vorgegeben ist, typisch. Die kombinierten Sonderzusätze verbessern die Haftungsfähigkeit wesentlich im Gegensatz zu den oben zitierten.

Annahmen von G. Aggen und P.R. Bornemann. Die hier genannten negativen Auswirkungen von Titanlegierungszusätzen sind wider Erwarten bei der kombinierten Zugabe von Titan mit Zirkonium nicht gegeben. Eine wesentliche Verbesserung der Heißkorrosion, des elektrischen Widerstandsverhaltens und der Warmfestigkeit bei Temperaturen auch oberhalb von 1000 ° C bis zu ca. 1350 ° C ist vorhanden.

Durch die Verwendung von kostengünstigeren Legierungselementen im Vergleich zu den austenitischen mit Chrom und Nickel legierten Stählen läßt sich zusätzlich die mechanische Belastbarkeit von ferritischen Werkstoffen oberhalb von 1100 ° C erhöhen. Die metallischen Bauteile für die Herstellung von Heizelementen aller Art sowie Abgasleitungen und Metallträgern in diesen sind in ihren Leistungen bei den erwähnten Anforderungen für diese Verwendungszwecke den bekannten Legierungskombinationen überlegen. Neben den vorerwähnten Eigenschaften wird die Duktilität während der Herstellung des Vormaterials (Profil- und Flacherzeugnisse) bei der Formgebung und Wärmebehandlung positiv beeinflußt. Dies gilt im gleichen Sinne auch für die Verringerung der Sprödigkeit bei Temperaturbelastungen bei und nach dem Schweißen zur Herstellung und Montage z. B. von Abgassystemen und Metallträgerkörpern aus Fe-Cr-Al-Folien in Katalysatoren und bei dem Betrieb dieser Bauelemente innerhalb der vorgesehenen Belastungsbereiche. Die neuen Stähle sind daher bevorzugt vorgesehen zur Verwendung als Werkstoffe für die Herstellung von Heizelementen in der Elektrowärmetechnik und thermisch hochbelasteten Bauteilen wie Brennkammern, Abgas-führende Systeme (nach Verbrennungsprozessen) und Elementen zur Verringerung von Schadstoffen in Verbrennungsgasen (Katalysator-Trägerfolien).

Der erfindungsgemäße Stahl ist gekennzeichnet durch Zusätze von mehreren sauerstoffaffinen Elementen in Kombination miteinander und gegebenenfalls Seltenen Erdmetallen. Dadurch ergibt sich eine hitzebeständige Stahllegierung mit erhöhter Anwendungstemperatur durch verbesserte Warmfestigkeit der ferritischen Mikrostruktur. Allen genannten Anwendungen ist gemeinsam, daß bei erhöhten Temperaturen auch bei zyklischer Belastung die neuen Stähle fest haftende $Al_2O_3$-Zunderschichten bilden.

Die Sonderzusätze beeinflussen die Verarbeitungsbedingungen der Halbfertigerzeugnisse (Profil- und Flachquerschnitte) und die Gebrauchseigenschaften der aus den hitzebeständigen Legierungen hergestellten Bauteile derart, daß die Duktilität der ferritischen Matrix erhöht und die Formstabilität auch im Temperaturbereich oberhalb 1000°C beibehalten wird.

Innerhalb der erwähnten Anwendungen bei hohen Temperaturen ist die Einflußnahme der Konzentrationen der einzelnen Elemente in den Legierungen der Erfindung wie folgt zu beschreiben:
Der Kohlenstoffgehalt ist im Hinblick auf die Ausbildung der Oxidschicht, vor allem deren Gleichmäßigkeit, nach oben einzugrenzen. Der Einfluß der Chromkonzentration mit 12 bis 30% ist je nach der Höhe der thermischen Belastung bei den verschiedenen Anwendungen zu variieren. Chrom als maßgeblicher Träger des umwandlungsfreien ferritischen Gefüges wird vor allem bei häufig wechselnden Temperaturen im oberen Konzentrationsbereich, vorzugsweise zwischen 19 und 26 % liegen.

Neben Chrom ist Aluminium zur Erhöhung und Erhaltung des Oxidationswiderstandes wesentlich. Die vorgestellten Anwendungszwecke erfordern vor allem bei Betriebstemperaturen über 1000°C Konzentrationen zwischen 5 und 8 % Al. Aluminium ist der Träger für die Bildung der Oxidschicht, die fast ausschließlich aus $Al_2O_3$ besteht. Hohe Gehalte sind Voraussetzung für eine längere Lebensdauer vor allem bei zyklisch auftretender Temperaturbelastung.

Die Zirkoniumgehalte sind zur Abbindung von Kohlenstoff vorgesehen. Zusätzlich wird durch Zusatz von Zirkonium erreicht, daß der Chromgehalt auch während der thermischen Belastung gleichmäßig in der Mikrostruktur in metallischer Form erhalten bleibt. Eine Chromverarmung entlang der Korngrenzen findet nicht statt. Damit wird das Auftreten interkristalliner Korrosion vermieden.

Die Wirkung des Titans verläuft im gleichen Sinne, jedoch ist der Effekt auf die Verbesserung des elektrischen Widerstandsverhaltens, der Zunderbeständigkeit sowie der mechanischen Eigenschaften bei erhöhten Temperaturen (z.B. 900 bis 1300 °C) geringer als bei Zirkonium als zusätzlichem Legierungselement. Wesentlich für die Verbesserung der Eigenschaften der Legierungskombinationen ist das Zusammenwirken von Titan und Zirkonium in der Fe-Cr-Al-Legierung.

Der Zusatz von Calcium und Magnesium dient der Verbesserung des Reinheitsgrades und verringert dadurch die Rißanfälligkeit bei der Warmformgebung.

In den Erzeugnisformen Profilmaterial und Blech/Folie kommen unterschiedliche Abmessungen zum Einsatz. Es hat sich als günstig erwiesen, für Bauteile mit größeren Wandstärken in allen Erzeugnisformen Legierungen mit höheren Stickstoffgehalten zu verwenden. Dadurch werden mit den genannten Zusätzen Sondernitride gebildet, die den Beginn der Grobkornbildung zu höheren Temperaturen verschieben. Zusätzlich können die Reaktionsprodukte des Stickstoffs mit den Sonderzusätzen die Warmfestigkeit der ferritischen Matrix anheben.

Die durch die vorgestellte Legierungszusammensetzung verbesserte Schutzfunktion der Oxidschicht führt zu einer direkten Beeinflussung des elektrischen Widerstands.

Auch Ausscheidungen - intermetallischer Phasen - in der metallische Matrix, d.h. im Leiterquerschnitt, erhöhen die Warmzug-Belastbarkeit, die Längenänderung durch Kriechdehnung während langer Belastungsdauer wird verringert.

**Patentansprüche**

1. Halbfertigerzeugnis, insbesondere Profil- und Flachprodukte, bestehend aus einem ferritischen Stahl mit 0,008 bis 0,10 % Kohlenstoff, max. 0,80 % Silizium, 0,10 bis 1,00 % Mangan, max. 0,035 % Phosphor, max. 0,020 % Schwefel, 12 bis 30 % Chrom, 0,1 bis 1,0 % Molybdän, max. 1 % Nickel, 3,5 bis 8,0 % Aluminium und den Zusätzen 0,010 bis 1,0 % Zirkonium, 0,003 bis 0,3 % Titan und 0,003 bis 0,30 % Stickstoff, Calcium plus Magnesium von 0,005 bis 0,05 % sowie wahlweise Seltene Erdmetalle in einer Menge von 0,003 und 0,80 %, Niob in einer Menge bis 0,5 %, Rest Eisen mit den üblichen Begleitelementen.

2. Halbfertigerzeugnis nach Anspruch 1, bestehend aus einem ferritischen Stahl mit
max. 0,04 % C,
0,20 bis 0,70 % Si,
0,10 bis 0,40 % Mn,
max. 0,025 % P,

max. 0,01 % S,

15 bis 26 % Cr,

0,1 bis 0,35 % Mo,

max. 0,20 % Ni,

4,8 bis 7,0 % Al,

0,05 bis 0,50 % Zr,

0,10 bis 0,30 % Ti und

0,008 bis 0,030 % N,

Rest Eisen und unvermeidbare Verunreinigungen.

3. Halbfertigerzeugnis nach Anspruch 1, bestehend aus einem ferritischen Stahl mit

max. 0,04 % C,

0,20 bis 0,7 % Si,

0,10 bis 0,4 % Mn,

max. 0,025 % P,

max. 0,01 % S,

15 bis 26 % Cr,

0,1 bis 0,35 % Mo,

max. 0,2 % Ni,

4,8 bis 7,0 % Al,

0,05 bis 0,5 % Zr,

0,010 bis 0,3 % Ti,

0,005 bis 0,03 % N,

0,005 bis 0,05 % Seltene Erdmetalle,

Rest Eisen einschließlich unvermeidbare Verunreinigungen.

4. Halbfertigerzeugnis nach Ansprch 1, bestehend aus einem Stahl mit

max. 0,04 % C,

0,20 bis 0,7 % Si,

0,10 bis 0,4 % Mn,

max. 0,025 % P,

max. 0,005 % S,

15 bis 26 % Cr,

0,1 bis 0,35 % Mo

max. 0,20 % Ni,

4,8 bis 7,0 % Al,

0,050 bis 0,5 % Zr,

0,010 bis 0,3 % Ti,

0,005 bis 0,03 % N,

max. 0,5 % Nb,

0,005 bis 0,05 % Seltene Erdmetalle,

Rest Eisen und unvermeidbare Verunreinigungen.

5. Verwendung eines Halbfertigerzeugnisses nach einem der Ansprüche 1 bis 4 in Form von Profil- (Draht) oder Flacherzeugnissen zur Herstellung von Heizelementen zum Betreiben elektrisch-widerstandsbeheizter Öfen und Geräte.

6. Verwendung eines Halbfertigerzeugnisses nach einem der Ansprüche 1 bis 4 zur Herstellung von thermischen Belastungen bei der Ableitung heißer, z.B. aus Verbrennungsprozessen stammender Gase ausgesetzten Konstruktionsteilen.

7. Verwendung eines Halbfertigerzeugnisses nach einem der Ansprüche 1 bis 4 in Folienform zur Herstellung von Katalysatorträgern für die Verringerung der Schadstoffe in Abgasen.

**Claims**

1. Semifinished product, especially sectional and flat products, consisting of a ferritic steel with 0.008 to 0.10 % carbon, up to 0.80 % silicon, 0.10 to 1.00 % manganese, up to 0.035 % phosphorus, up to 0.020 % sulphur, 12 to 30 % chromium, 0.1 to 1.0 % molybdenum, up to 1 % nickel, 3.5 to 8.0 % aluminium and the additions 0.010 to 1.0 % zirconium, 0.003 to 0.3 % titanium and 0.003 to 0.30 % nitrogen, 0.005 to 0.05 % of calcium plus magnesium, optionally together with 0.003 % to 0.80 % rare earth metals, up to 0.5 % niobium, and the remainder iron with the usual accompanying elements.

2. Semifinished product according to claim 1, consisting of a ferritic steel with

up to 0.04 % C,

0.20 to 0.70 % Si,

0.10 to 0.40 % Mn,

up to 0.025 % P,

up to 0.01 % S,

15 to 26 % Cr,

0.1 to 0.35 % Mo,

up to 0.20 % Ni,

4.8 to 7.0 % Al,

0.05 to 0.50 % Zr,

0.10 to 0.30 % Ti and

0.008 to 0.030 % N,

and the remainder iron and unavoidable impurities.

3. Semifinished product according to claim 1, consisting of a ferritic steel with

up to 0.04 % C,

0.20 to 0.7 % Si,

0.10 to 0.4 % Mn,

up to 0.025 % P,

up to 0.01 % S,

15 to 26 % Cr,

0.1 to 0.35 % Mo,

up to 0.2 % Ni,

4.8 to 7.0 % Al,

0.05 to 0.5 % Zr,

0.010 to 0.3 % Ti,

0.005 to 0.03 % N,

0.005 to 0.05 % rare earth metals,

and the remainder iron including unavoidable impurities.

4. Semifinished product according to claim 1, consisting of a steel with
   up to 0.04 % C,
   0.20 to 0.7 % Si,
   0.10 to 0.4 % Mn,
   up to 0.025 % P,
   up to 0.005 % S,
   15 to 26 % Cr,
   0.1 to 0.35 % Mo,
   up to 0.20 % Ni,
   4.8 to 7.0 % Al,
   0.050 to 0.5 % Zr,
   0.010 to 0.3 % Ti,
   0.005 to 0.03 % N,
   up to 0.5 % Nb,
   0.005 to 0.05 % rare earth metals,
   and the remainder iron and unavoidable impurities.

5. Use of a semifinished product according to one of claims 1 to 4 in the form of sectional (wire) or flat products for producing heating elements for operating furnaces, ovens and apparatus having electrical resistance heating.

6. Use of a semifinished product according to one of claims 1 to 4 for producing structural parts subject to thermal stresses during the offtake of hot gases, originating for example from combustion processes.

7. Use of a semifinished product according to one of claims 1 to 4 in foil form for producing supports for catalysts for reducing pollutants in waste gases.

**Revendications**

1. Produit semi-fini, produits profilés et produits plats notamment, composé à partir d'un acier ferritique comportant de 0,008 à 0,10% de carbone, 0,80% max. de silicium, de 0,10 à 1,00% de manganèse, 0,035% max. de phosphore, 0,020% de soufre, de 12 à 30% de chrome, de 0,1 à 1,0% de molybdène, 1,0% max. de nickel, de 3,5 à 8,0% d'aluminium et des produits d'addition de 0,010 à 1,0% de zirconium, de 0,003 à 0,3% de titane, de 0,003 à 0,30% d'azote et de 0,005 à 0,05% de calcium plus magnésium, ainsi que, selon les nécessités, une quantité de 0,003 à 0,80% de métaux terreux rares, une quantité de niobium allant jusqu'à 0,5%, pour le reste du fer comportant les impuretés usuelles.

2. Produit semi-fini selon la revendication 1, composé à partir d'un acier ferritique comportant
   0,04% C max.,
   0,20 à 0,70% Si,
   0,10 à 0,40% Mn,
   0,025% P max.,
   0,01% S max.,
   15 à 26% Cr,
   0,1 à 0,35% Mo,
   0,20% Ni max.,
   4,8 à 7,0% Al,
   0,05 à 0,50% Zr,
   0,10 à 0,30% Ti et
   0,008 à 0,030% N,
   pour le reste du fer et des impuretés inévitables.

3. Produit semi-fini selon la revendication 1, composé à partir d'un acier ferritique comportant
   0,04% C max. ,
   0,20 à 0,7% Si ,
   0,10 à 0,4% Mn ,
   0,025% P max. ,
   0,01% S max. ,
   15 à 26% Cr ,
   0,1 à 0,35% Mo ,
   0,2% Ni max. ,
   4,8 à 7,0% Al ,
   0,05 à 0,5% Zr ,
   0,010 à 0,3% Ti ,
   0,005 à 0,03% N ,
   0,005 à 0,05% de métaux terreux rares
   pour le reste du fer, impuretés inévitables incluses.

4. Produit semi-fini selon la revendication 1, composé à partir d'un acier comportant
   0,04% C max. ,
   0,20 à 0,7% Si ,
   0,10 à 0,4% Mn ,
   0,025% P max. ,
   0,005% S max. ,
   15 à 26% Cr,
   0,1 à 0,35% Mo ,
   0,20% Ni max. ,
   4,8 à 7,0% Al ,
   0,050 à 0,5% Zr ,
   0,010 à 0,3% Ti ,
   0,005 à 0,03% N ,
   0,5% Nb max. ,
   0,005 à 0,05% de métaux terreux rares,
   pour le reste du fer et les impuretés inévitables.

5. Utilisation d'un produit semi-fini selon l'une des revendications 1 à 4, sous forme de produits profilés (fil métallique) ou plats pour la fabrication d'éléments chauffants servent au fonctionnement de poêles et d'appareils électriques à résistance chauffante.

6. Utilisation d'un produit semi-fini selon l'une des revendications 1 à 4, servant à la fabrication de charges thermiques pour la conductance d'éléments de construction soumis à des gaz chauds provenant par exemple de processus de combustion.

7. Utilisation d'un produit semi-fini selon l'une des revendications 1 à 4 sous forme de feuilles pour la fabrication de supports de catalyseurs servant à réduire les substances nocives de gaz d'échappement.